# EUROPÄISCHE PATENTSCHRIFT

(11) **EP 2 583 856 B1**
(45) Veröffentlichungstag und Bekanntmachung des Hinweises auf die Patenterteilung: **08.05.2019**
(21) Anmeldenummer: 13000190.2
(22) Anmeldetag: 06.11.2007
(51) Int. Cl.: B60L 11/02, B60L 11/12, B60L 11/18

(54) **Hybridantrieb**
Hybrid drive
Entraînement hybride

(30) Priorität: 06.11.2006 DE 202006016956 U; 22.12.2006 DE 202006019422 U
(43) Veröffentlichungstag der Anmeldung: 24.04.2013
(62) Teilanmeldung aus: 07021564.5
(73) Patentinhaber: FAUN Umwelttechnik GmbH & Co. KG, 27711 Osterholz-Scharmbeck (DE)
(72) Erfinder: Dreher, Holger, 76744 Wörth (DE); Koch, Markus, 13503 Berlin (DE); Sandkühler, Georg, 27711 Osterholz-Scharmbeck (DE); Kirchhoff, Johannes, 58636 Iserlohn (DE)
(74) Vertreter: Laufhütte, Dieter

(56) Entgegenhaltungen:
- EP-A1- 1 731 345
- EP-A2- 1 209 016
- DE-A1- 19 934 790
- US-A1- 2006 116 797

## Beschreibung

Die vorliegende Erfindung betrifft einen Hybridantrieb für ein Fahrzeug, insbesondere für ein Müllsammelfahrzeug, mit einem ersten Verbrennungsmotor und einem Elektromotor zum Vortrieb des Fahrzeugs.

Bei PKWs und Omnibussen für den Stadtverkehr sind als Technik zur Kraftstoffeinsparung eine Vielzahl solcher hybrider Antriebsvarianten bekannt. Hierbei gibt es zwei grundlegende Varianten: Bei der einen Variante ersetzt das elektrische System die mechanische Verbindung zwischen Verbrennungsmotor und angetriebenen Rädern (serieller Hybrid), während bei der anderen Variante Elektromotor und Verbrennungsmotor gemeinsam auf die Räder wirken, wobei die Kopplung typischer Weise über ein Planetengetriebe erfolgt (paralleler Hybrid). Beiden Systemen ist gemeinsam, dass ein elektrischer Energiespeicher zum Einsatz kommt, welcher vom Verbrennungsmotor erzeugte, aber nicht zum Vortrieb benötigte Energie speichert. Das elektrische System dient somit dazu, die Drehzahlen von Verbrennungsmotor und Rädern weitgehend zu entkoppeln und die Leistungsabgabe des Motors zu glätten. Dadurch kann der Motor gleichmäßig in günstigen Betriebspunkten des Motorkennfeldes betrieben werden, was zu einer Reduzierung des Kraftstoffverbrauchs und einer schadstoffarmen Verbrennung führt. Außerdem ist es mit dem elektrischen System möglich, kinetische Energie beim Bremsen in elektrische Energie umzuwandeln, zu speichern und bei der nächsten Leistungsanforderung wieder freizugeben. Dieses regenerative Bremsen bewirkt ebenfalls eine Kraftstoffeinsparung.

Insbesondere bei Abfallsammelfahrzeugen ergibt sich jedoch die besondere Situation, daß sich die Anforderungen an den Fahrantrieb des Fahrgestells des Abfallsammelfahrzeugs während der Transportfahrt grundlegend von den Anforderungen während des Abfallsammelns unterscheiden. Unabhängig davon, ob ein konventioneller Antrieb nur über einen Verbrennungsmotor oder ein bekannter Hybridantrieb verwendet wird, ist die maximale Leistung des Fahrantriebs durch die Transportfahrt bestimmt, so dass der Verbrennungsmotor beim Abfallsammeln ungünstig ausgenutzt wird. Hierdurch ergibt sich ein hoher Kraftstoffverbrauch während des Abfallsammelns.

Zudem muss wegen des extremen Stop-and-Go-Betriebs während des Abfallsammelns ein Automatikgetriebe eingesetzt werden, um einen extremen Kupplungsverschleiß zu vermeiden. Ein solches Automatikgetriebe hat aber ebenfalls einen erhöhten Kraftstoffverbrauch zur Folge.

Bei Abfallsammelfahrzeugen werden zudem neben den Anforderungen an den Kraftstoffverbrauch zunehmend hohe Anforderungen an die Lärmemission gestellt, welche mit den bekannten Hybridantrieben ebenfalls nicht ohne weiteres erfüllt werden können.

Aus der DE 199 34 790 A1 ist ein Antriebssystem für Kraftfahrzeuge bekannt mit einem durch einen Verbrennungsmotor antreibbaren Hauptantriebsstrang und einem durch einen weiteren Verbrennungsmotor antreibbaren Nebenantriebsstrang, welche durch ein Zwischengetriebe miteinander koppelbar sind. Der Verbrennungsmotor des Nebenantriebsstrangs ist mit einem Starter-Generator koppelbar, welcher fest mit dem Zwischengetriebe verbunden ist.

Die US 2006 / 0 116 797 A1 offenbart einen Hybridantrieb mit einem über einen PTO (Power Take Off) mit einem Verbrennungsmotor eines Antriebsstrangs gekoppelten Elektromotor, welcher mit einem weiteren Verbraucher verbunden ist.

Aufgabe der vorliegenden Erfindung ist es deshalb, einen Hybridantrieb für ein Fahrzeug, insbesondere für ein Müllsammelfahrzeug, zur Verfügung zu stellen, welcher auch bei sehr unterschiedlichen Anforderungen energiesparend arbeitet und eine Minimierung der Lärmemission ermöglicht.

Erfindungsgemäß wird diese Aufgabe von einem Hybridantrieb gemäß Anspruch 1 gelöst. Der erfindungsgemäße Hybridantrieb umfasst einen Verbrennungsmotor zum Vortrieb des Fahrzeugs über einen Antriebsstrang, sowie einen weiteren Verbraucher, wobei ein Elektromotor vorgesehen ist, welcher mit dem weiteren Verbraucher und mit dem Antriebsstrang verbindbar ist. Erfindungsgemäß ist der Elektromotor über ein PTO (Power Take Off) mit dem Antriebsstrang verbindbar und ist sowohl zum Antrieb des Fahrzeugs als auch als Generator verwendbar. Ferner ist vorgesehen, dass beim Bremsen kinetische Energie mittels des als Generator verwendeten Elektromotors in elektrische Energie umgewandelt und in einem Energiespeicher gespeichert wird.

Durch den erfindungsgemäßen Aufbau muss der konventionelle Antriebsstrang des Fahrzeugs zur Kraftübertragung nicht mit einem zusätzlichen Verteilergetriebe ausgestattet werden, da der serielle PTO-Abgriff für den Elektroantrieb genutzt werden kann. Dabei wird der PTO-Abtriebsstrang für die Kraftübertragung bzw. Krafteinleitung des Elektromotors verwendet. So ist die bei konventionellen Hybridantrieben mögliche Speicherung und Rückgewinnung der Bremsenergie ohne größeren konstruktiven Aufwand möglich, da anstelle eines aufwendigen Verteilergetriebes der PTO-Abgriff des Abtriebsstrangs verwendet werden kann. Dieser PTO-Abgriff ist vorteilhafterweise am Schaltgetriebe des Antriebsstrangs angeordnet und verfügt weiterhin vorteilhafterweise über mindestens eine, noch vorteilhafterweise über zwei Kupplungen. Ein solcher PTO ist dabei bereits aus dem Stand der Technik bekannt, wird dort aber nicht für den Hybridantrieb, sondern z. B. für den Antrieb der Hydraulikpumpe verwendet.

Bei einem solchen erfindungsgemäßen Hybridantrieb kann ein von einem zweiten Verbrennungsmotor angetriebenes Stromerzeugungsaggregat verwendet werden, um den Elektromotor mit Energie zu versorgen. Hierdurch ist es möglich, den Verbrennungsmotor während der Transportfahrt zu verwenden, wohingegen während des Abfallsammelns der Elektromotor zum Vortrieb des Fahrzeugs verwendet wird. Dieser kann nun aber über das Stromerzeugungsaggregat mit Energie versorgt werden, ohne dass der Verbrennungsmotor zum Einsatz kommt. Der zweite Verbrennungsmotor zum Antrieb des Stromerzeugungsaggregats kann hierdurch optimal für den Abfallsammelbetrieb ausgelegt werden und bezüglich Kraftstoffverbrauch und Lärmemission optimiert werden. Hierdurch entfallen sämtliche Probleme, welche durch die Doppelfunktion des in konventionellen Systemen verwendeten Verbrennungsmotors sowohl zur Energieerzeugung als auch zum Vortrieb des Fahrzeugs entstehen. Das Stromerzeugungsaggregat kann dabei im wesentlichen aus einem Aufbau-Dieselmotor, einem Generator und einer Schalldämmung bestehen. Für den Fachmann ist dabei offensichtlich, dass der erfindungsgemäße Hybridantrieb nicht nur für Müllsammelfahrzeuge zum Einsatz kommen kann, sondern auch für beliebige andere Fahrzeuge, insbesondere wenn diese unterschiedliche Betriebsmodi mit unterschiedlichen Leistungsanforderungen an den Vortrieb aufweisen.

Vorteilhafterweise kann die zeitweise nicht benötigte Leistung eines Stromerzeugungsaggregats von dem Energiespeicher aufgenommen und bei einem erhöhten Leistungsbedarf der elektrischen Antriebe wieder abgegeben werden.

Weiterhin vorteilhafterweise umfasst der erfindungsgemäße Hybridantrieb eine Antriebselektronik, welche abhängig von Fahrersignalen den Elektromotor ansteuert. Entsprechend der Stellung von Gas- und Bremspedal wird so in der Antriebselektronik die elektrische Leistung für den Elektromotor gewandelt.

Weiterhin vorteilhafterweise werden bei dem erfindungsgemäßen Hybridantrieb Pumpen, Arbeitsmaschinen und/oder Nebenaggregate von einem Stromerzeugungsaggregat und/oder Energiespeicher mit Energie versorgt. So können die Antriebe für die Arbeitsmaschinen und/oder die Nebenaggregate insbesondere des Fahrgestells (Lenkunterstützung, Druckluftversorgung, Klimakompressor, Bordnetz) vom elektrischen System des Hybridantriebs mit Energie versorgt werden. Daneben kann das elektrische System vorteilhafterweise auch die Arbeitsmaschinen bzw. die Pumpen der Arbeitsmaschinen des Aufbaus mit Energie versorgen.

Alternativ können Pumpen, Arbeitsmaschinen und/oder Nebenaggregate auch von dem Elektromotor angetrieben werden. Hier sind vorteilhafterweise Kupplungen vorgesehen, durch deren Schaltposition die einzelnen Antriebe zu- oder abgeschaltet werden können. So werden entweder die Räder des Fahrzeugs zum Vortrieb oder die Pumpen der Arbeitsmaschinen angetrieben, oder aber sowohl die Räder des Fahrzeugs als auch die Pumpen der Arbeitsmaschinen.

Weiterhin vorteilhafterweise kommt bei dem erfindungsgemäßen Hybridantrieb für den Verbrennungsmotor ein Schaltgetriebe zum Einsatz. Da während des extremen Stop-and-Go-Betriebs während des Abfallsammelns der Vortrieb des Fahrzeugs über den Elektromotor geschieht, kann auf ein Automatikgetriebe mit erhöhtem Kraftstoffverbrauch und erhöhten Kosten verzichtet werden.

Weiterhin vorteilhafterweise umfasst der erfindungsgemäße Hybridantrieb dabei einen Transportmodus, in welchem das Fahrzeug über den Verbrennungsmotor angetrieben wird sowie einen Sammelmodus, in welchem das Fahrzeug im Normalbetrieb nur über den Elektromotor angetrieben wird.

Weiterhin vorteilhafterweise wird dabei im Sammelmodus bei großen Anforderungen an die Vortriebsleistung der Verbrennungsmotor zugeschaltet. So muss der elektrische Antrieb nicht auf diese großen Anforderungen ausgelegt werden und kann so energiesparender, leiser und günstiger arbeiten.

Vorteilhafterweise erfolgt die Verbindung des Elektromotors mit dem weiteren Verbraucher und mit dem Antriebsstrang jeweils über mindestens eine Kupplung. Durch Betätigen dieser Kupplung erfolgt eine einfache und effiziente Verbindung des Elektromotors mit dem weiteren Verbraucher und mit dem Antriebsstrang.

Vorteilhafterweise ist dabei der Elektromotor zwischen den weiteren Verbraucher und den Antriebsstrang geschaltet. Bei einer solchen seriellen Anordnung ist es z. B. durch Öffnen der Kupplung zwischen Elektromotor und Antriebsstrang möglich, den weiteren Verbraucher nur über den Elektromotor zu betreiben. Öffnet man dagegen die Kupplung zwischen dem weiteren Verbraucher und dem Elektromotor und schließt jene zwischen dem Elektromotor und dem Antriebsstrang, kann der Elektromotor zum Vortrieb bzw. zur Energiegewinnung genutzt werden. Sind dagegen beide Kupplungen geschlossen, kann entweder der Elektromotor als Generator verwendet werden und der weitere Verbraucher über den Antriebsstrang angetrieben werden, oder aber der Elektromotor und der Antriebsstrang beide zum Antrieb des weiteren Verbrauchers und/oder zum Vortrieb verwendet werden.

Vorteilhafterweise weist der erfindungsgemäße Hybridantrieb dabei die entsprechenden Betriebsmodi auf, welche von einer Steuerung ausgeführt werden. Vorteilhafterweise weist der Hybridantrieb dabei insbesondere einen Betriebsmodus auf, in welchem der weitere Verbraucher nur oder überwiegend über den Elektromotor angetrieben wird. Insbesondere wenn es sich bei dem Fahrzeug um ein Müllsammelfahrzeug handelt, kann so während der Müllsammelfahrt der weitere Verbraucher nur oder überwiegend über den Elektromotor angetrieben werden, so daß der Fahrmotor wenig belastet wird oder überhaupt komplett abgeschaltet werden kann, so daß sich der Energieverbrauch und die Lärmentwicklung entsprechen reduzieren lassen.

Vorteilhafterweise ist dabei der weitere Verbraucher eine Pumpe eines Hydrauliksystems, eine Arbeitsmaschine oder ein Nebenaggregat. Insbesondere auf Müllsammelfahrzeugen sind solche Verbraucher vorhanden und müssen gerade während der Müllsammelfahrt betrieben werden, so daß sich hier die erwähnten Vorteile ergeben.

Die vorliegende Erfindung umfasst weiterhin ein Müllsammelfahrzeug mit einem Hybridantrieb, wie er weiter oben beschrieben wurde. Offensichtlich hat ein solches Fahrzeug die gleichen Vorteile wie der oben beschriebene Hybridantrieb.

Die vorliegende Erfindung wird nun anhand von Ausführungsbeispielen und Zeichnungen näher beschrieben. Dabei zeigen:
- Figur 1:: ein erstes Ausführungsbeispiel eines Hybridantriebs,
- Figur 2:: ein zweites Ausführungsbeispiel eines Hybridantriebs,
- Figur 3:: ein bevorzugtes Ausführungsbeispiel des erfindungsgemäßen Hybridantriebs, und
- Figur 4:: ein drittes Ausführungsbeispiel eines Hybridantriebs.

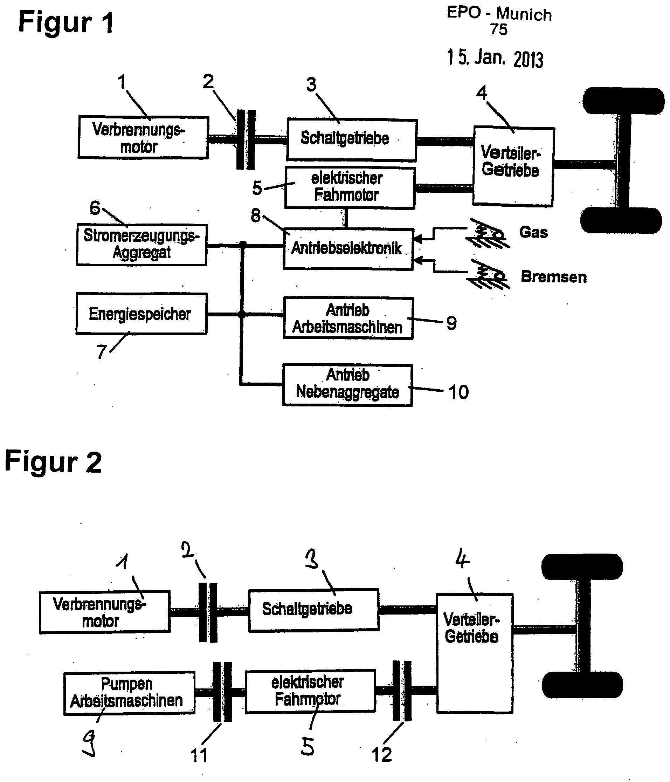

Figur 1 zeigt ein erstes Ausführungsbeispiel eines Hybridantriebs, welches jedoch nicht Teil der vorliegenden Erfindung ist. Dieses umfasst auf der einen Seite einen konventionellen Antriebsstrang bestehend aus einem Verbrennungsmotor 1, einer Schaltkupplung 2 und einem Schaltgetriebe 3. Parallel hierzu ist das elektrische Antriebssystem angeordnet, dessen elektrischer Fahrmotor 5 über die Antriebselektronik 8 angesteuert wird. Die Energie des elektrischen Antriebssystems wird dabei von einem Stromerzeugungsaggregat 6 bereitgestellt, welches im wesentlichen aus einem Aufbau-Dieselmotor, einem Generator und einer Schalldämmung besteht. Die zeitweise nicht benötigte Leistung des Generators wird, genauso wie die frei werdende Energie beim Bremsen, von dem Energiespeicher 7 aufgenommen und bei einem erhöhten Leistungsbedarf der elektrischen Antriebe wieder abgegeben. Entsprechend der Stellung von Gas- und Bremspedal wird in der Antriebselektronik 8 die elektrische Leistung für den Fahrmotor 5 gewandelt. Über das Verteilergetriebe 4 kann der Fahrer entweder den konventionellen Antrieb über den Verbrennungsmotor 1 oder den elektrischen Fahrmotor 5 auf die Hinterachse schalten. Auch ist es möglich, sowohl den Verbrennungsmotor 1 als auch den elektrischen Fahrmotor 5 zuzuschalten, so dass der konventionelle Antrieb auch im Abfallsammelbetrieb bei besonderen Anforderungen zugeschaltet werden kann, so dass der elektrische Antrieb nicht auf diese besonderen Anforderungen ausgelegt werden muss.

Im in Figur 1 dargestellten ersten Ausführungsbeispiel versorgt das elektrische System neben dem elektrischen Fahrmotor 5 auch die Antriebe 9 für die Arbeitsmaschinen sowie die Antriebe 10 der Nebenaggregate des Fahrgestells (Lenkunterstützung, Druckversorgung, Klimakompressor, Bordnetz) mit Strom.

Durch diesen Hybridantrieb ist es möglich, ein Abfallsammelfahrzeug in beiden Betriebsmodi mit niedrigem Kraftstoffverbrauch und geringer Lärmentwicklung zu betreiben.

Während des ersten Betriebsmodus, der Transportfahrt, wird das Abfallsammelfahrzeug über den konventionellen Antriebsstrang aus Verbrennungsmotor 1 und Schaltgetriebe 3 angetrieben. Verbrennungsmotor 1 und Schaltgetriebe 3 können so für die Anforderungen der Transportfahrt optimiert werden. Natürlich ist es dabei möglich, den elektrischen Antrieb hierbei wie bei einem herkömmlichen Hybridantrieb einzusetzen, um auch während der Transportfahrt den Energieverbrauch zu minimieren.

Während des zweiten Betriebsmodus, des Abfallsammelns, wird das Abfallsammelfahrzeug dagegen im Normalbetrieb nur über den elektrischen Antrieb durch den elektrischen Fahrmotor 5 angetrieben. Der Verbrennungsmotor 1 wird hierbei ausgeschaltet, da anders als bei herkömmlichen Hybridantrieben das Stromerzeugungsaggregat 6, welches über einen separaten Verbrennungsmotor angetrieben wird, den elektrischen Fahrmotor mit Energie versorgt. Dieser separate Verbrennungsmotor ist als Aufbau-Dieselmotor mit Schalldämmung ausgeführt und kann so optimal auf die Anforderungen der Stromerzeugung ausgelegt werden. Hierdurch wird während der Müllsammelfahrt erheblich weniger Kraftstoff verbraucht und weniger Lärm produziert als durch den Antrieb über den auf die Transportfahrt ausgelegten Verbrennungsmotor 1.

Der konventionelle Antriebsstrang mit dem Verbrennungsmotor 1 sowie das elektrische System mit dem Stromerzeugungsaggregat 6 und dem elektrischen Fahrmotor 5 sind damit unabhängig voneinander betreibbar, wobei der Fahrer zwischen dem konventionellen Antrieb und dem elektrischen Antrieb wählen kann. Zusätzlich kann der konventionelle Antrieb über den Verbrennungsmotor 1 auch im Abfallsammelbetrieb bei besonderen Anforderungen wie z. B. steilen Bergen eingeschaltet werden, so dass der elektrische Antrieb nicht auf diese besonderen Anforderungen ausgelegt werden muss. So kann der Kraftstoffverbrauch im Normalbetrieb weiter gesenkt werden.

Der Antrieb des Abfallsammelfahrzeugs während des Abfallsammelns über das elektrische System hat zudem den Vorteil, dass im konventionellen Antriebsstrang auf ein teueres Automatikgetriebe verzichtet werden kann, welches zudem einen erhöhten Kraftstoffverbrauch zur Folge hat. Zudem kann das elektrische Antriebssystem genutzt werden, um die Antriebe der Arbeitsmaschinen und Nebenaggregate entweder mit Strom zu versorgen oder über den elektrischen Fahrmotor 5 direkt anzutreiben, so dass auf die sonst nötigen Energieversorgungen bzw. Antriebe für diese Komponenten verzichtet werden kann.

In Figur 2 ist ein zweites Ausführungsbeispiel eines Hybridantriebs dargestellt, welches ebenfalls nicht Teil der vorliegenden Erfindung ist und welches sich vom ersten Ausführungsbeispiel insbesondere durch den unterschiedlichen Antrieb der Arbeitsmaschinen unterscheidet. Hierzu ist eine Kupplung 12 zwischen dem elektrischen Fahrmotor 5 und dem Verteilergetriebe 4 sowie eine Kupplung 11 zwischen den Pumpen der Arbeitsmaschinen 9 sowie dem elektrischen Fahrmotor 5 vorgesehen. Je nach den Schaltpositionen der beiden Kupplungen 11 und 12 können so entweder die Räder oder die Pumpen der Arbeitsmaschinen oder sowohl die Räder als auch die Pumpen der Arbeitsmaschinen angetrieben werden. Hierdurch ist es möglich, die Pumpen der Arbeitsmaschinen über den elektrischen Fahrmotor anzutreiben, ohne daß hierfür gesonderte Antriebe nötig wären.

Dabei ist die in Figur 2 gezeigte Anordnung, bei welcher der Elektromotor 5 mit den Arbeitsmaschinen als weiteren Verbrauchern und mit dem Antriebsstrang verbindbar ist, auch unabhängig von der in Figur 1 gezeigten Stromversorgung des Elektromotors über einen weiteren Verbrennungsmotor auch bei Hybridantrieben nach dem Stand der Technik vorteilhaft einsetzbar. Dabei kann der Elektromotor 5 während Abbremsphasen des Fahrzeugs über die Kupplung 12 mit dem Antriebsstrang verbunden werden und als Generator dienen, so daß die Bewegungsenergie des Fahrzeugs in elektrische Energie umgewandelt und in einem Energiespeicher gespeichert werden kann.

Diese gespeicherte Energie läßt sich dann entweder in Beschleunigungsphasen des Fahrzeugs zum Vortrieb des Fahrzeugs oder aber zum Betrieb der Arbeitsmaschine 9 verwenden. Hierzu werden die Kupplungen 11 und 12 entsprechend geschaltet. Eine solche Anordnung hat z. B. den Vorteil, daß während der Müllsammelfahrt die Arbeitsmaschinen über den elektrischen Fahrmotor 5 betrieben werden können, ohne daß der Verbrennungsmotor 1, welcher als Fahrmotor dient, belastet würde. Hierdurch ergibt sich eine deutliche Reduzierung der Lärmbelastung. Darüber hinaus ergibt sich der Vorteil, daß bei hohen Leistungsanforderungen der Arbeitsmaschinen 9 nicht nur der elektrische Fahrmotor 5, sondern auch der Verbrennungsmotor 1 zum Betrieb der Arbeitsmaschinen herangezogen werden kann, um den elektrischen Fahrmotor zu unterstützen oder zu ersetzen. Eine solche wechselseitige Unterstützung von Verbrennungsmotor und elektrischem Fahrmotor sowohl für den Antrieb des Fahrzeugs als auch für den Antrieb der Arbeitsmaschinen ermöglicht eine entsprechende kleinere Dimensionierung aller beteiligten Komponenten mit den bereits beschriebenen Preis- und Verbrauchsvorteilen.

Natürlich läßt sich eine solche Anordnung des elektrischen Fahrmotors 5 zum Antrieb der Arbeitsmaschinen 9 besonders vorteilhaft mit der in Figur 1 gezeigten Anordnung kombinieren, in welcher ein separater zweiter Verbrennungsmotor als Stromerzeugungsaggregat 6 dient und die elektrische Energie für den elektrischen Fahrmotor bzw. den Energiespeicher 7 zur Verfügung stellt. Dabei ergibt sich insbesondere der weitere Vorteil, daß zum Antrieb der Arbeitsmaschinen wie z. B. der Pumpen eines Hydrauliksystems weder separate Elektromotoren verwendet werden müssen noch der Verbrennungsmotor 1 belastet wird.

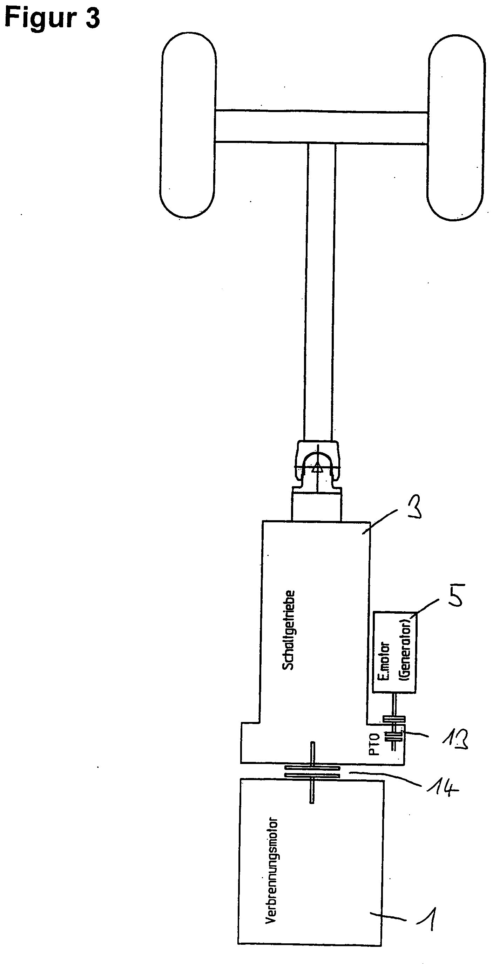

In Figur 3 ist ein bevorzugtes Ausführungsbeispiel der vorliegenden Erfindung gezeigt, bei welchem der Verbrennungsmotor 1 über eine Kupplung 14 mit einem Schaltgetriebe 3 in Verbindung steht, welches wiederum eine Achse des Fahrzeuges antreibt. Anders als in dem zuvor beschriebenen ersten und zweiten Ausführungsbeispiel eines Hybridmotors ist dabei der Elektromotor 5 nicht über ein separates Verteilergetriebe mit diesem Antriebsstrang verbunden, sondern steht erfindungsgemäß über die serielle PTO 13 mit dem Antriebsstrang in Verbindung. Diese PTO steht z. B. bei Müllsammelfahrzeugen ohnehin zur Verfügung, da über diese üblicherweise die Arbeitsmaschinen wie z. B. die Pumpen des Hydrauliksystems angetrieben werden. Die PTO 13 umfaßt hier zwei Kupplungen.

So ist es möglich, den Elektromotor 5 ohne weiteren konstruktiven Aufwand einerseits bei Beschleunigungsphasen des Fahrzeugs zur Unterstützung des Verbrennungsmotors (bei geschlossener Kupplung 14) oder zum alleinigen Antrieb des Fahrzeugs (bei geöffneter Kupplung 14) zu verwenden. Andererseits ist es möglich, den Elektromotor 5 auch als Generator zu verwenden, welcher z. B. in Abbremsphasen die Bewegungsenergie des Fahrzeugs in elektrische Energie umwandelt. Auch ist es möglich, den Verbrennungsmotor 1 mit im Wesentlichen gleichbleibender Belastung zu betreiben, wobei die nicht zum Vortrieb benötigte Energie über den Elektromotor ebenfalls in elektrische Energie umgewandelt und dann in einem Energiespeicher gespeichert wird.

Offensichtlich ist eine solche Anordnung, bei welcher der Elektromotor über ein PTO mit dem Antriebsstrang in Verbindung steht, unabhängig von den vorher gezeigten Hybridsystemen von großem Vorteil und kann auch als Hybridsystem wie im Stand der Technik eingesetzt werden. Noch größere Vorteile ergeben sich allerdings in einer Kombination mit den zuvor gezeigten Ausführungsbeispielen. Zum Beispiel kann der Elektromotor 5 über eine weitere Kupplung die Arbeitsmaschinen des Fahrzeugs antreiben, was einer Kombination des zweiten Ausführungsbeispiels eines Hybridantriebs und des bevorzugten Ausführungsbeispiels des erfindungsgemäßen Hybridantriebs entspräche. Ebenso ist es möglich, einen separaten Verbrennungsmotor zur Stromerzeugung einzusetzen, was einer Kombination des ersten Ausführungsbeispiels eines Hybridantriebs und des bevorzugten Ausführungsbeispiels des erfindungsgemäßen Hybridantriebs entspräche. Auch ist es möglich, alle diese Ausführungsbeispiele miteinander zu kombinieren.

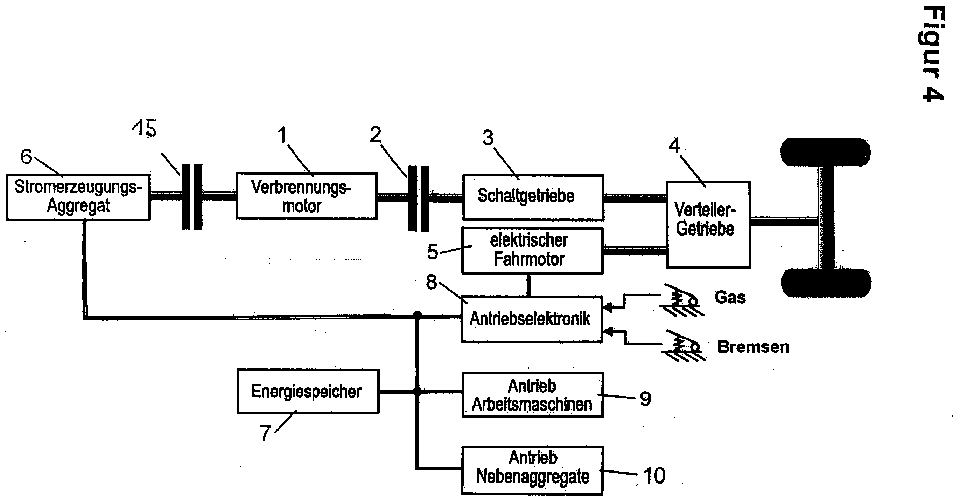

Figur 4 zeigt ein drittes Ausführungsbeispiel eines Hybridantriebs, welches ebenfalls nicht Teil der vorliegenden Erfindung ist, bei welchem das Stromerzeugungsaggregat 6 jedoch anders als bei dem in Figur 1 gezeigten ersten Ausführungsbeispiel nicht von einem zweiten Verbrennungsmotor, sondern von dem als Fahrmotor eingesetzten Verbrennungsmotor 1 angetrieben wird. Hierfür ist das Stromerzeugungsaggregat 6 über eine Kupplung 15 mit dem Verbrennungsmotor 1 verbunden. Ansonsten entspricht das in Figur 4 gezeigte vierte Ausführungsbeispiel dem in Figur 1 gezeigten ersten Ausführungsbeispiel eines Hybridantriebs, so dass bezüglich der übrigen Ausführungen des Hybridantriebs auf die Beschreibung bezüglich des ersten Ausführungsbeispiels verwiesen wird.

Dabei wird im dritten Ausführungsbeispiel in einem ersten Betriebsmodus das Stromerzeugungsaggregat 6 vom Verbrennungsmotor 1 angetrieben, wobei die Steuerung des Verbrennungsmotors hierbei mindestens einen der Zylinder des Verbrennungsmotors abschaltet. Durch diese Abschaltung eines oder mehrerer Zylinder während des ersten Betriebsmodus kann die Abtriebsleistung des Verbrennungsmotors auf einfache Weise an die geringeren Anforderungen für die Stromerzeugung angepaßt werden, wobei hierfür der Betriebspunkt des Verbrennungsmotors ansonsten nicht verändert werden braucht. Hierdurch ist es möglich, in unterschiedlichen Betriebsphasen mit stark unterschiedlichen Anforderungen an den Verbrennungsmotor 1 diesen dennoch an einem vorteilhaften Betriebspunkt zu betreiben. Hierdurch kann auf einen zweiten Verbrennungsmotor zum Antrieb des Stromerzeugungsaggregats 6 verzichtet werden.

Im Transportmodus, welcher während einer üblichen Straßenfahrt eines Müllsammelfahrzeugs zum Einsatz kommen kann, ist der Verbrennungsmotor 1 wie im ersten Ausführungsbeispiel über die Kupplung 2 mit dem Antriebsstrang des Fahrzeugs verbunden, so dass das Fahrzeug über den Verbrennungsmotor 1 angetrieben wird. Der elektrische Fahrmotor 5 kann dabei wie bei einem klassischen Hybridsystem eingesetzt werden, um den Arbeitspunkt des Verbrennungsmotors, welcher während dem Transportmodus vorteilhafterweise mit allen Zylindern arbeitet, möglichst konstant zu halten und die beim Bremsen frei werdende Energie in elektrische Energie umzuwandeln.

Alternativ kann im dritten Ausführungsbeispiel die beim Bremsen frei werdende Energie auch über das Stromerzeugungsaggregat 6 in elektrische Energie umgewandelt und im Energiespeicher 7 gespeichert werden, indem die Kupplung 15, welche das Stromerzeugungsaggregat 6 mit dem Verbrennungsmotor 1 verbindet, geschlossen wird. Somit können im dritten Ausführungsbeispiel entweder der Verbrennungsmotor 1 und der elektrische Fahrmotor 5 als (in diesem Fall paralleler) Hybridantrieb, oder der Verbrennungsmotor 1 und das Stromerzeugungsaggregat 6 als (in diesem Fall serieller) Hybridantrieb arbeiten. Vorteilhafterweise wird dabei insbesondere im Transportmodus ein kombinierter Hybridantrieb eingesetzt, bei welchem der elektrische Fahrmotor 5 dazu verwendet wird, das Fahrzeug anzutreiben, während das Stromerzeugungsaggregat 6 dazu verwendet wird, die Bremsenergie in elektrische Energie umzuwandeln. Hierdurch kann der elektrische Fahrmotor 5 optimal auf den Antrieb, und das Stromerzeugungsaggregat 6 optimal auf die Stromerzeugung ausgelegt werden.

Während des Sammelmodus wird der Verbrennungsmotor 1 dagegen üblicherweise über die Kupplung 2 vom Antriebsstrang des Fahrzeugs getrennt, so dass das Fahrzeug nur über den elektrischen Fahrmotor 5 angetrieben wird. Die benötigte elektrische Energie wird dabei über das Stromerzeugungsaggregat 6 und den Energiespeicher 7 geliefert, wobei der Verbrennungsmotor 1 über die Kupplung 15 mit dem Stromerzeugungsaggregat 6 verbunden ist und dieses antreibt. Um den Verbrennungsmotor 1 in diesem Sammelmodus, bei welchem erheblich geringere Leistungsanforderungen an den Verbrennungsmotor 1 gestellt werden, dennoch in einem optimalen Betriebspunkt zu betreiben, werden einer oder mehrere der Zylinder des Verbrennungsmotors 1 abgeschaltet. Diese werden hierbei nicht mehr mit Kraftstoff versorgt und tragen somit nicht mehr zur Abtriebsleistung des Verbrennungsmotors 1 bei.

Wiederum kann auch während der Sammelfahrt in Phasen mit besonders hoher Belastung der Verbrennungsmotor 1 zur Unterstützung des elektrischen Fahrmotors 5 herangezogen werden, indem er über die Kupplung 2 mit dem Antriebsstrang des Fahrzeugs verbunden wird. Vorteilhafterweise arbeitet der Verbrennungsmotor 1 dann mit allen Zylindern.

Bei dem in Figur 4 gezeigten dritten Ausführungsbeispiel sind dabei wie im ersten Ausführungsbeispiel weitere Arbeitsmaschinen 9 und Nebenaggregate 10 vorgesehen, welche ebenfalls elektrisch angetrieben werden und von dem Stromerzeugungsaggregat 6 und dem Energiespeicher 7 mit elektrischer Energie versorgt werden. Alternativ hierzu kann der in Figur 4 gezeigte Hybridantrieb jedoch auch mit dem in Figur 2 gezeigten zweiten Ausführungsbeispiel kombiniert werden. Der elektrische Fahrmotor 5 treibt dann die Arbeitsmaschinen 9 und Nebenaggregate 10 direkt an. Die Ausführung eines solchen Hybridantriebs entspricht dann der bezüglich des zweiten Ausführungsbeispiels dargestellten Anordnung, wobei das Stromerzeugungsaggregat 6 vom Verbrennungsmotor 1 angetrieben wird und die Steuerung des Verbrennungsmotors zum Antrieb des Stromerzeugungsaggregats mindestens einen der Zylinder des Verbrennungsmotors abschaltet.

Ebenso kann das im dritten Ausführungsbeispiel gezeigte Hybridsystem mit der in Figur 3 gezeigten erfindungsgemäßen Anordnung des Elektromotors am PTO des Antriebsstrangs kombiniert werden.

Insgesamt ergeben sich durch die vorliegende Erfindung hervorragende Möglichkeiten, ohne großen konstruktiven Aufwand insbesondere bei Müllsammelfahrzeugen sowohl den Kraftstoffverbrauch zu senken als auch die Lärmbelastung insbesondere beim Müllsammeln zu reduzieren.

## Patentansprüche

1. Hybridantrieb mit einem Verbrennungsmotor (1) zum Vortrieb des Fahrzeugs über einen Antriebsstrang, sowie mit einem weiteren Verbraucher, wobei ein Elektromotor (5) vorgesehen ist, welcher mit dem weiteren Verbraucher und mit dem Antriebsstrang verbindbar ist,
**dadurch gekennzeichnet,**
**dass** der Elektromotor (5) über ein PTO (Power Take Off) mit dem Antriebsstrang verbindbar ist und sowohl zum Antrieb des Fahrzeugs als auch als Generator verwendbar ist, und dass beim Bremsen mittels des als Generator verwendeten Elektromotors (5) kinetische Energie in elektrische Energie umgewandelt und in einem Energiespeicher (7) gespeichert wird.

2. Hybridantrieb nach Anspruch 1, wobei die Verbindung des Elektromotors (5) mit dem weiteren Verbraucher und mit dem Antriebsstrang jeweils über mindestens eine Kupplung erfolgt.

3. Hybridantrieb nach Anspruch 1, wobei der Elektromotor (5) zwischen den weiteren Verbraucher und den Antriebsstrang geschaltet ist.

4. Hybridantrieb nach Anspruch 1 mit einem Betriebsmodus, in welchem der weitere Verbraucher nur oder überwiegend über den Elektromotor (5) angetrieben wird.

5. Hybridantrieb nach Anspruch 1, wobei der weitere Verbraucher eine Pumpe eines Hydrauliksystems, eine Arbeitsmaschine oder ein Nebenaggregat ist.

6. Hybridantrieb nach einem der vorangegangenen Ansprüche, mit einer Antriebselektronik (8), welche abhängig von Fahrersignalen den Elektromotor (5) ansteuert.

7. Hybridantrieb nach einem der vorangegangenen Ansprüche, wobei Pumpen, Arbeitsmaschinen (9) und/oder Nebenaggregate (10) von einem Stromerzeugungsaggregat (6) und/oder dem Energiespeicher (7) mit Energie versorgt werden.

8. Hybridantrieb nach einem der vorangegangenen Ansprüche, wobei Pumpen, Arbeitsmaschinen (9) und/oder Nebenaggregate (10) von dem Elektromotor (5) angetrieben werden.

9. Hybridantrieb nach einem der vorangegangenen Ansprüche, mit einem Transportmodus, in welchem das Fahrzeug über den Verbrennungsmotor (1) angetrieben wird und
einem Sammelmodus, in welchem das Fahrzeug im Normalbetrieb nur über den Elektromotor (5) angetrieben wird.

10. Müllsammelfahrzeug mit einem Hybridantrieb gemäß einem der vorangegangenen Ansprüche.

## Claims

1. Hybrid drive with a combustion engine (1) for the propulsion of the vehicle via a power train, as well as with a further consumer, wherein an electric motor (5) is provided, which is connectable to the further consumer and to the power train,
**characterized in that**
the electric motor (5) is connectable to the power train via a Power Take Off (PTO) and can be used both, to power the vehicle, and as a generator, and **in that** kinetic energy is transformed into electric energy by means of the electric motor (5) used as a generator during the braking, and stored in an energy accumulator (7).

2. Hybrid drive according to claim 1, wherein the connection of the electric motor (5) to the further consumer and to the power train respectively occurs via at least one clutch.

3. Hybrid drive according to claim 1, wherein the electric motor (5) is connected between the further consumer and the power train.

4. Hybrid drive according to claim 1, with an operating mode, in which the further consumer is exclusively or mainly driven by the electric motor (5).

5. Hybrid drive according to claim 1, wherein the further consumer is a pump of a hydraulic system, a working machine or an auxiliary unit.

6. Hybrid drive according to any one of the preceding claims, with a drive electronics (8), which controls the electric motor (5) dependent upon driver signals.

7. Hybrid drive according to any one of the preceding claims, wherein pumps, working machines (9) and/or auxiliary units (10) are supplied with energy by a power generator unit (6) and/or the energy accumulator (7).

8. Hybrid drive according to any one of the preceding claims, wherein pumps, working machines and/or auxiliary units (10) are driven by the electric motor (5).

9. Hybrid drive according to any one of the preceding claims, with a transport mode, in which the vehicle is driven via the combustion engine (1), and a collection mode, in which the vehicle, in normal operation, is only driven via the electric motor (5).

10. refuse collection vehicle comprising a hybrid drive according to any one of the preceding claims.

## Revendications

1. Entraînement hybride comprenant un moteur à combustion interne (1), destiné à la propulsion du véhicule par le biais d'un groupe motopropulseur, ainsi qu'un autre consommateur, un moteur électrique (5) étant prévu, lequel peut être relié à l'autre consommateur et au groupe motopropulseur,
**caractérisé en ce que**
le moteur électrique (5) peut être relié au groupe motopropulseur par le biais d'une prise de force (PTO) et peut être utilisé aussi bien pour l'entraînement du véhicule qu'en tant que générateur, et **en ce que**, lors du freinage, de l'énergie cinétique est transformée en énergie électrique au moyen du moteur électrique (5) utilisé comme générateur et stockée dans un accumulateur d'énergie (7).

2. Entraînement hybride selon la revendication 1, dans lequel la liaison du moteur électrique (5) avec l'autre consommateur et au groupe motopropulseur est effectuée respectivement par le biais d'au moins un embrayage.

3. Entraînement hybride selon la revendication 1, dans lequel le moteur électrique (5) est branché entre l'autre consommateur et le groupe motopropulseur.

4. Entraînement hybride selon la revendication 1, comprenant un mode de fonctionnement, dans lequel l'autre consommateur est entraîné uniquement ou principalement par le biais du moteur électrique (5).

5. Entraînement hybride selon la revendication 1, dans lequel l'autre consommateur est une pompe d'un système hydraulique, une machine de travail ou un groupe auxiliaire.

6. Entraînement hybride selon l'une des revendications précédentes, comprenant une électronique d'entraînement (8), qui commande le moteur électrique (5) en fonction de signaux du conducteur.

7. Entraînement hybride selon l'une des revendications précédentes, dans lequel des pompes, des machines de travail (9) et/ou des groupes auxiliaires (10) sont alimentés en énergie par un groupe électrogène (6) et/ou l'accumulateur d'énergie (7).

8. Entraînement hybride selon l'une des revendications précédentes, dans lequel des pompes, des machines de travail (9) et/ou des groupes auxiliaires (10) sont entraînés par le moteur électrique (5).

9. Entraînement hybride selon l'une des revendications précédentes, comprenant un mode de transport, dans lequel le véhicule est entraîné par le biais du moteur à combustion interne (1) et
un mode de collecte, dans lequel le véhicule est entraîné en fonctionnement normal uniquement par le biais du moteur électrique (5).

10. Véhicule de collecte des déchets comprenant un entraînement hybride selon l'une des revendications précédentes.
